# EUROPÄISCHE PATENTSCHRIFT

(11) **EP 2 191 113 B1**
(45) Veröffentlichungstag und Bekanntmachung des Hinweises auf die Patenterteilung: **20.04.2011**
(21) Anmeldenummer: 08786596.0
(22) Anmeldetag: 30.07.2008
(51) Int. Cl.: F01N 3/28, B01J 35/04, B01J 35/00

(54) **METALLISCHE FOLIE ZUR HERSTELLUNG VON WABENKÖRPERN UND DARAUS HERGESTELLTER WABENKÖRPER**
METAL FOIL FOR PRODUCING HONEY-COMB STRUCTURES AND HONEY-COMB STRUCTURE PRODUCED THEREFROM
FEUILLE MÉTALLIQUE POUR LA PRODUCTION DE CORPS EN NID-D'ABEILLES ET CORPS EN NID-D'ABEILLES

(30) Priorität: 07.09.2007 DE 102007042616
(43) Veröffentlichungstag der Anmeldung: 02.06.2010
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); SCHEPERS, Sven, 53844 Troisdorf (DE); HODGSON, Jan, 53840 Troisdorf (DE); ALTHÖFER, Kait, 51674 Wiehl (DE)
(74) Vertreter: Rössler, Matthias
(86) Internationale Anmeldenummer: PCT/EP2008/059961
(87) Internationale Veröffentlichungsnummer: WO 2009/033881

(56) Entgegenhaltungen:
- EP-A- 0 392 203
- EP-A- 1 251 250
- DE-A1- 4 403 500
- US-A- 5 874 153

## Beschreibung

Die vorliegende Erfindung betrifft die Herstellung und Anwendung einer metallischen Folie aus einem hochtemperatur-korrosionsfesten Stahl, insbesondere die Anwendung in Komponenten zur Abgasreinigung von Verbrennungskraftmaschinen, vorzugsweise in Kraftfahrzeugen.

Es ist seit langem bekannt, dass metallische Folien bei der Herstellung von Wabenkörpern, insbesondere für Abgassysteme von Verbrennungskraftmaschinen, eingesetzt werden. Wegen der hohen Temperaturen bei solchen Anwendungen werden meist chrom- und aluminiumhaltige Stähle eingesetzt. Typische Folien haben eine Dicke von 20 bis 180 µm (Mikrometer), insbesondere im Bereich von 30 bis 120 µm, und werden durch Walzen hergestellt. Insbesondere bei der Verwendung solcher Folien für metallische Wabenkörper und andere Komponenten zur Abgasreinigung müssen auch besondere Anforderungen an die Oberfläche gestellt werden.

Die Eigenschaft der Hochtemperatur-Korrosionsfestigkeit ergibt sich gerade daraus, dass sich an der Oberfläche solcher Folien eine schützende Oxidschicht bildet, die bei aluminiumhaltigen Stählen hauptsächlich aus Aluminiumoxid, insbesondere γ-Aluminiumoxid (Gamma-Aluminiumoxid), besteht. Im Allgemeinen werden aus metallischen Folien hergestellte Wabenkörper in Abgassystemen mit einem katalytisch aktiven Material beschichtet, welches in der Form eines sogenannten Washcoat aufgetragen wird. Hier muss die Oberfläche der Folie zusätzlich eine gute Haftung der zusätzlichen Beschichtung ermöglichen.

Schließlich ist noch eine weitere Problematik zu berücksichtigen, nämlich die Verbindungstechnik, die bei der Herstellung von Wabenkörpern aus metallischen Folien für die Stabilität der Wabenkörper verantwortlich ist. Langjährige Erfahrungen haben gezeigt, dass in einem Wabenkörper, der aus unterschiedlich strukturierten Folien hergestellt wird, nicht alle Berührungsstellen zwischen den Folien miteinander verbunden werden sollten, sondern Verbindungen nur in ausgewählten Bereichen sinnvoll sind, da nur auf diese Weise gleichzeitig hohe Stabilität und Elastizität bei thermischen Wechselbelastungen gewährleistet werden können. Als Verbindungstechnik kommt insbesondere das Hartlöten, vorzugsweise Hochtemperatur-Vakuumlöten, in Betracht. Metallische Folien verbinden sich bei hoher Temperatur an ihren Berührungsstellen jedoch auch abhängig von verschiedenen Parametern durch Diffusionsverbindungen miteinander. Dies kann gezielt zur Herstellung von Verbindungen genutzt werden, kann jedoch auch erheblich stören, wenn bestimmte Berührungsbereiche gerade nicht miteinander verbunden werden sollen. Für diese Vorgänge spielt die Oberflächenbeschaffenheit der Folien eine wichtige Rolle.

Die DE - A1 - 4403500 beschreibt eine mit Zeolith beschichtbare Folie für einen Wabenkörper, der sich für die Abgasreinigung bei Kraftfahrzeugen mit Verbrennungsmotoren eignet. Die Folie hat dabei eine mittlere Oberflächenrauhigkeit (Mittenrauhwert Ra) von 2 bis 4 µm, wobei deren gemittelte Rauhtiefe Rz mindestens 0,2 µm beträgt. Dabei wird diese Rauhigkeit von der Oxidschicht bestimmt, so dass diese nicht gleichmäßig dick ist.

Die EP - A1 - 1251250 offenbart eine Folie für die Herstellung eines Wabenkörpers zur Abgasnachbehandlung mit einer Rauhigkeit zwischen 2 und 5 µm. Die Rauhigkeit ist dazu vorgesehen, dass ein Schmiermittel für den Bearbeitungsprozess der Folie vorgehalten werden kann.

Die EP - A1 - 0392203 offenbart eine metallische Folie auf Eisen-Chrom-Aluminium-Basis zur Verwendung als Trägermaterial für Katalysatoren, insbesondere in der Kraftfahrzeugtechnik, welche eine Rauhigkeit von größer 0,3 µm aufweist. Dabei ist bevorzugt, dass eine Oxidbildung beim Herstellungsprozess der Folien soweit begrenzt ist, dass eine relative Massenzunahme durch Oxidation von weniger als 10 % auftritt.

Aufgabe der vorliegenden Erfindung ist es, eine metallische Folie mit einer Oberflächenbeschaffenheit anzugeben, die verbesserte Eigenschaften für die Herstellung eines Wabenkörpers, insbesondere für die beschriebenen Anwendungen, aufweist. Außerdem sind auch aus solchen Folien hergestellte Wabenkörper Gegenstand der vorliegenden Erfindung.

Zur Lösung dieser Aufgaben dienen eine Folie gemäß dem Anspruch 1 und ein Wabenkörper gemäß Anspruch 8. Vorteilhafte Ausgestaltungen sind in den jeweils abhängigen Ansprüchen angegeben.

Eine erfindungsgemäße Folie ist aus einem hochtemperaturfesten Material und weist eine erhöhte Oberflächenrauhigkeit, nämlich eine mittlere Oberflächenrauhigkeit von mehr als 0,3 µm.

Die Folie weist weiter ein metallisches Grundmaterial und auf ihren beiden Oberflächen eine Oxidschicht mit einer Dicke zwischen 60 und 80 nm (Nanometer) auf, wobei sich die Oberflächenrauhigkeit (Ra) auf das metallische Grundmaterial der Folie bezieht und die Dicke auf beiden Oberflächen mit einer Toleranz von weniger als 10 % gleichmäßig ist.

Für die Herstellung von Lötverbindungen kommt es unter anderem darauf an, dass Lot, welches beispielsweise in Pulverform in bestimmten Bereichen aufgebracht wird, sich über einen kleinen Umgebungsbereich durch Fließen verteilen kann, wenn die Schmelztemperatur erreicht wird. Die Fließ- und Benetzungseigenschaften eines Lotes auf einer Oberfläche hängen stark von der Oberflächenrauhigkeit des verwendeten Materials ab. Auch beeinflusst die Oberflächenrauhigkeit die Wahrscheinlichkeit einer Bildung von Diffusionsverbindungen. Als vorteilhaft hat sich eine relativ raue Oberfläche gezeigt, mit einer mittleren Oberflächenrauhigkeit von mehr als 0,3 µm. Bei den angegebenen Rauhigkeitswerten handelt es sich um arithmetische Mittelwerte der Rauhigkeit, meist mit Rₐ abgekürzt, wie sie nach dem Tastschnittverfahren gemessen werden. Dieses Verfahren ist beispielsweise beschrieben in dem Artikel "Rauheitsmessung an gewalzten Feinblechen" in der Zeitschrift "Stahl und Eisen 109" (Jahrgang 1989 Nr. 12; S. 589 und 590).

Die hier angegebene Oberflächenrauhigkeit liegt insbesondere dort vor, wo Lotverbindungen und/oder Kontaktstellen benachbarter Folien im Wabenkörper gegeben sind. Die Oberflächenrauhigkeit wird weiter durch das Material der Folie bzw. deren mechanische Behandlung bestimmt, insoweit ist hier insbesondere nicht die Rauhigkeit von auf der Folie bestehenden Beschichtungen oder Schichten gemeint. Sollte die Folie (und/oder der Wabenkörper) mit einer Beschichtung/Schicht ausgeführt sein, ist demnach die Oberflächenrauhigkeit der Folie selbst (also z.B. des metallischen Grundmaterials) relevant.

Besonders geeignet sind im Zusammenhang mit der vorliegenden Erfindung gewalzte Folien, deren Oberflächenrauhigkeit in Walzrichtung und/oder in Querrichtung dazu, eine mittlere Oberflächenrauhigkeit von mehr als 0,3 µm, vorzugsweise mehr als 0,5 µm, besonders bevorzugt mehr als 0,6 µm, aufweisen. Bei diesen Rauhigkeiten ergeben sich besonders günstige Eigenschaften zum Verarbeiten, Löten, Verhindern von Diffusionsanbindungen und der Hochtemperatur-Korrosionsfestigkeit. Eine Obergrenze für die Rauhigkeit liegt bei etwa 0,8 bis 1 µm, da bei sehr rauen Oberflächen Lot nicht mehr in ausreichendem Maße fließt und benetzt. Um eine entsprechende Benetzung mit (insbesondere) Lotpulver zu erreichen und gleichzeitig eine Diffusionsanbindung später sicher zu unterbinden ist bevorzugt, dass die Oberflächenrauhigkeit (ggf. in beide Messrichtungen) im Bereich von 0,53 bis 0,68 µm liegt.

Eine erfindungsgemäße Folie hat an ihren Oberflächen jeweils auch eine Oxidschicht mit einer Dicke von 60 bis 80 nm (Nanometer), vorzugsweise 70 bis 75 nm. Dieser Dickenbereich hat sich als besonders günstig Für die Herstellung von Wabenkörpern mit den gewünschten Eigenschaften, insbesondere für die Anwendung in Abgasanlagen von Kraftfahrzeugen, erwiesen. In solchen Wabenkörpern werden typischerweise unterschiedlich strukturierte Folien aufeinandergeschichtet und/oder gewickelt, wobei die Oxidschicht nach Möglichkeit die mechanischen Herstellungsschritte nicht negativ beeinflussen soll. Im geschichteten bzw. gewickelten Wabenkörper gibt es Berührungsstellen zwischen den geschichteten bzw. gewickelten Folien und/oder zwischen Folien und anderen Bauteilen, beispielsweise einem Mantelrohr oder einem metallisch ummantelten Sensor. Mittels verschiedener bekannter Verfahren können in manchen Bereichen die Berührungsstellen zu festen Verbindungsstellen gemacht werden, beispielsweise durch Aufbringen von Lot und anschließendes Erhitzen. Die entstehenden hartgelöteten Verbindungen werden durch eine Oxidschicht der angegebenen Dicke nicht wesentlich verschlechtert. Andererseits verhindert diese Oxidschicht in Verbindung mit der erfindungsgemäßen Rauhigkeit, dass sich an Berührungsstellen, die nicht verbunden werden sollen, bei der Erhitzung des Wabenkörpers unerwünschte Diffusionsverbindungen ausbilden. Dafür ist die Oxidschicht dick genug, so dass die gewünschte selektive Herstellung von Verbindungsstellen durch die Rauhigkeit und die Oxidschicht stark begünstigt wird.

Bevorzugt lässt sich die Erfindung auf Stähle mit Chrom- und Aluminiumanteilen anwenden, insbesondere auf Stähle mit Aluminiumgehalten von 1 bis 5 %. Ein Aluminiumgehalt bis zu 5 % ist ohne wesentliche Nachteile für die sonstigen Eigenschaften einer Folie besonders günstig für die Hochtemperatur-Korrosionsfestigkeit.

Besonders bevorzugt weist das Grundmaterial der Folie 14 bis 25 % Chrom und 3 bis 5 % Aluminium auf. Verwendet werden insbesondere die Stähle 1.4767 (20% Chrom, 5 % Aluminium) oder 1.4725 (14 % Chrom, 4 % Aluminium) gemäß dem deutschen Stahlschlüssel.

Eine Oxidschicht auf den Oberflächen der erfindungsgemäßen Folie besteht bevorzugt im Wesentlichen aus Aluminiumoxid, insbesondere γ-Aluminiumoxid.

Die Oxidschicht weist auf allen Oberflächen in dem Wabenkörper eine etwa gleichmäßige Dicke mit einer Toleranz von weniger als 10 %, vorzugsweise weniger als 5 %, auf. Bei der gezielten selektiven Herstellung von Verbindungsstellen und der gezielten Verhinderung von Verbindungen in anderen Bereichen ist es wichtig, dass überall an den Berührungsstellen ähnliche Bedingungen herrschen, weshalb eine geringe Toleranz der Oxidschicht von Vorteil ist.

Die Eigenschaft der betrachteten Stahlfolien, ohne besondere Oberflächeneigenschaften an Berührungsstellen bei hoher Temperatur Diffusionsverbindungen zu bilden, und die Eigenschaft der erfindungsgemäßen Oberflächenrauhigkeit ggf. in Verbindung mit geeigneten Oxidschichten, solche Verbindungen zu verhindern, können auch dadurch bei der Herstellung eines Wabenkörpers sinnvoll genutzt werden, dass die Oxidschicht in bestimmten Bereichen, in denen Verbindungen gewünscht werden, entfernt und/oder die Rauhigkeit vermindert wird. Bei einer beispielsweise in Streifenform vorgenommenen Entfernung der Oxidschicht und/oder Glättung der Oberfläche bilden sich in einem späteren Wabenkörper gerade dort haltbare Diffusionsverbindungen, wo die Oxidschicht entfernt ist, während sich an anderen Berührungsstellen keine oder nur schwache Verbindungen (schwach meint insbesondere maximal 10% oder sogar nur 6 % Diffusionsanbindungen in diesem Bereich) ausbilden. Auch auf diese Weise kann ein Wabenkörper mit den gewünschten Eigenschaften hergestellt werden.

Ihre besonderen Vorteile entfalten die beschriebenen Eigenschaften jedoch insbesondere, wenn die Verbindungsstellen in einem erfindungsgemäßen Wabenkörper durch Hartlöten, insbesondere Hochtemperatur-Vakuumlöten, hergestellt sind. Trotz der hohen Temperatur bei diesem Lötverfahren entstehen nur wenige bzw. schwache Diffusionsverbindungen in den nicht gelöteten Bereichen.

Die Vorteile werden insbesondere bei solchen Wabenkörpern erreicht, bei denen keine großflächigen Lotbereiche vorgesehen sind, sondern viele Kontaktstellen der Folien miteinander ohne Lötstelle aneinander anliegen und ggf. Relativbewegungen zueinander (z.B. aufgrund der wechselnden thermischen und dynamischen Belastungen im Abgassystem später im Einsatz) zu ermöglichen. Deshalb ist es gerade dann wichtig, dass tatsächlich nur die (wenigen) gewünschten Kontaktstellen miteinander mittels Lot verbunden sind und bei den anderen keine Diffusionsanbindung dieses Verhalten der Folien signifikant beeinflusst.

Ein solcher Wabenkörper hat eine Vielzahl innerer Kontaktpunkte der Folien miteinander. Zumeist werden diese Kontaktpunkte dadurch gebildet, dass ein Abschnitt einer strukturierten metallischen Folie an einem anderen Abschnitt einer benachbarten metallischen Folie (glatten und/oder strukturierten) anliegt. Diese Kontaktpunkte verlaufen also regelmäßig in Richtung einer Struktur verlaufende Kontaktlinien der benachbarten Abschnitte von metallischen Folien. Bei einer Querschnittsbetrachtung des Wabenkörpers werden nun also höchstens 20% dieser Kontaktpunkte zur Ausbildung der die Wabenstruktur fixierenden Lötstellen genutzt, bei den übrigen Kontaktpunkten ist (zumindest in dem betrachteten Querschnitt) keine Lötstelle ausgebildet. Bevorzugt liegt der Anteil der Lötstellen unter 10% oder sogar 5% der Kontaktpunkte.

Erfindungsgemäße Wabenkörper können nach ihrer Fertigstellung mit einer zusätzlichen Beschichtung versehen werden, insbesondere mit einem so genannten Washcoat und/oder katalytisch aktiven Materialien. Für Anwendungen bei der Abgasreinigung von Verbrennungskraftmaschinen sind in einer solchen zusätzlichen Beschichtung typischerweise Edelmetalle wie Platin oder Rhodium enthalten.

Hergestellt werden kann eine geeignete Oxidschicht auf einer erfindungsgemäßen Folie beispielsweise durch Einwirkung einer Temperatur zwischen 750 und 800°C auf die Folie in Luft als Umgebungsatmosphäre für eine Zeit zwischen 4 und 8 Sekunden, vorzugsweise etwa 6 Sekunden. Dies kann z. B. im Durchlauf durch eine Glühstrecke oder in ähnlichen Verfahren erfolgen. Die beschriebenen Folien eignen sich zur Herstellung von Wabenkörpern praktisch aller bekannten Formen und Herstellungsverfahren, bei denen auch bisher Stahlfolien eingesetzt wurden.

Zur Erläuterung der Erfindung und des technologischen Umfeldes dient auch die Zeichnung, die Ausführungsbeispiele und Anwendungen näher beschreibt, wobei die Erfindung jedoch nicht auf diese Beispiele beschränkt ist. Es zeigen schematisch und nicht maßstabsgerecht:
- Fig. 1:: eine Ansicht eines Wabenkörpers,
- Fig. 2:: den Bereich einer Verbindungsstelle zwischen zwei Folien in einem Wa- benkörper,
- Fig. 3:: ein anderes Beispiel einer Verbindungsstelle in einem Wabenkörper und
- Fig. 4:: eine erfindungsgemäße Folie in einer schematischen, teilweise geschnitte- nen perspektivischen Darstellung.

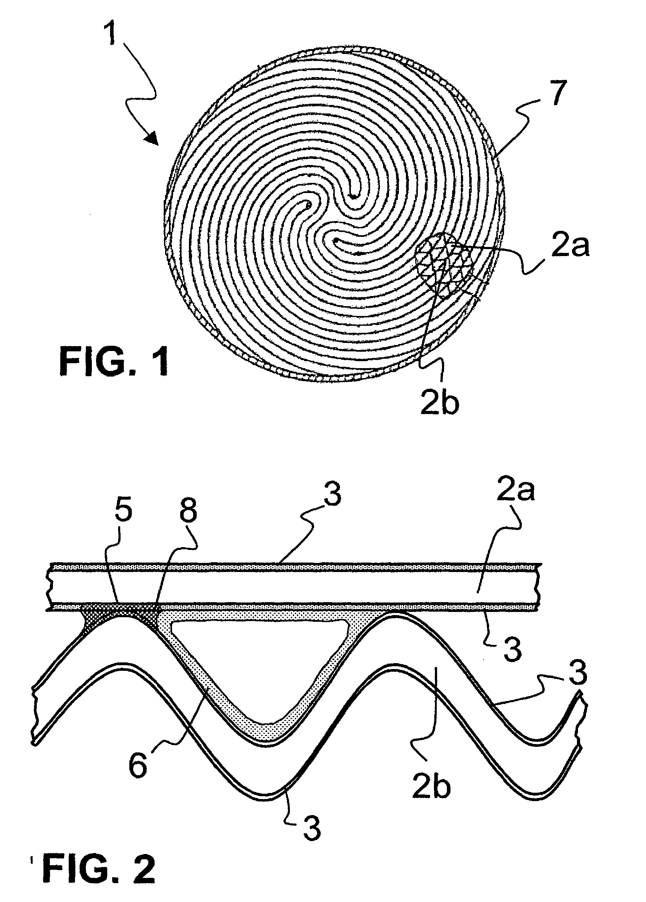

Fig. 1 zeigt schematisch in stirnseitiger Ansicht einen Wabenkörper 1, der aus glatten 2a und gewellten 2b metallischen Folien aufgebaut ist, die in einem Mantelrohr 7 angeordnet sind. Auf die genaue Form der Folienlagen kommt es im vorliegenden Fall nicht an. Die Erfindung kann auf praktisch alle bekannten Formen von metallischen Wabenkörpern angewendet werden.

Fig. 2 zeigt in einer schernatischen Schnittansicht aneinander liegend eine glatte Folienlage 2a und eine gewellte Folienlage 2b. An einer Berührungsstelle dieser Folienlagen 2a, 2b ist eine Verbindungsstelle 5 durch Lot 8 ausgebildet. Obwohl erfindungsgemäß die Folienlagen 2a, 2b mit Oxidschichten 3 versehen sind, können durch Löten feste Verbindungsstellen 5 erzeugt werden. An Berührungsstellen ohne Lot entstehen jedoch keine Verbindungen, wie zum Vergleich bei einer benachbarten Berührungsstelle dargestellt ist. Die Situation in einem fertigen Wabenkörper ist schematisch durch die zusätzliche Beschichtung 6 angedeutet, die nach Fertigstellung eines Wabenkörpers typischerweise aufgebracht wird.

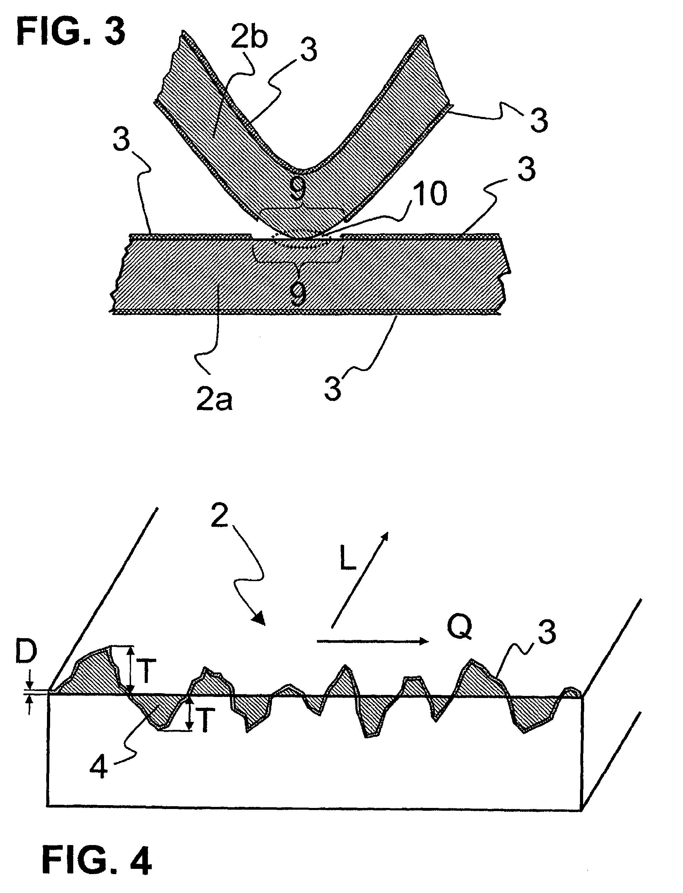

Fig. 3 zeigt die Situation einer Berührungsstelle zwischen einer glatten Folienlage 2a und einer gewellten Folienlage 2b, wenn in Teilbereichen 9 die Oxidschicht 3 von den Folienlagen 2a, 2b entfernt ist. In diesem Falle bildet sich eine Diffusionsverbindung 10 an der Berührungsstelle aus, wenn der Wabenkörper aufgeheizt wird.

Fig. 4 zeigt schematisch in einer teilweise geschnittenen perspektivischen Ansicht und maßstäblich übertrieben die Situation bezüglich Beschichtung und Rauhigkeit an der Oberfläche einer erfindungsgemäßen Folie 2. Solche Folien werden typischerweise in langen Bahnen durch Walzen hergestellt, wobei die Längsrichtung in Fig. 4 durch den Pfeil L angedeutet ist und der Walzrichtung entspricht. Quer dazu liegt die durch den Pfeil Q angedeutete Querrichtung, in der die Rauhigkeit schematisch dargestellt ist. Man erkennt, dass die Oxidschicht 3 mit der Dicke D eine kleine Dimension im Verhältnis zur Rauhigkeit der Oberfläche hat, also im Wesentlichen dem Verlauf der Oberflächenkontur folgt und diese nicht etwa ausgleicht. Die mittlere Oberflächenrauhigkeit ist schematisch durch die schraffierten Flächen angedeutet. An einer Folienoberfläche bilden sich Berge und Vertiefungen 4 unterschiedlicher Tiefe T bzw. Höhe aus, wobei die Oberflächenrauhigkeit einen Durchschnittswert der Abweichung dieser Berge und Täler von einem Mittelniveau angibt. Die Oberflächenrauhigkeit wird im Allgemeinen mit Rₐ bezeichnet. Es gibt verschiedene Möglichkeiten, die Rauhigkeit einer Folienoberfläche zu beeinflussen. So kann sie durch Polieren verringert und durch Bürsten oder Strahlen mit geeigneten Werkzeugen vergrößert werden. Der für die Erfindung besonders geeignete Rauhigkeitsbereich ist größer als übliche Werte beim Herstellen von Stahlfolien durch Walzen, jedoch ist es möglich, durch geeignete Walzen und Walzparameter Folien mit solchen Rauhigkeiten durch Walzen ohne Nachbehandlung herzustellen.

Die vorliegende Erfindung eignet sich besonders für die Herstellung von dauerhaltbaren hochtemperaturfesten Wabenkörpern für den Einsatz in Abgassystemen von Verbrennungskraftmaschinen, insbesondere bei Kraftfahrzeugen.

### Bezugszeichenliste

- 1: Wabenkörper
- 2: Folie
- 2a: glatte Blechlage
- 2b: gewellte Blechlage
- 3: Oxidschicht
- 4: Vertiefung
- 5: Verbindungsstelle
- 6: zusätzliche Beschichtung (Washcoat ggf. mit katalytisch aktivem Material)
- 7: Mantelrohr
- 8: Lot
- 9: Teilbereich frei von Oxidschicht
- 10: Diffusionsverbindung

- L: Längsrichtung (Walzrichtung)
- Q: Querrichtung
- T: Tiefe der Vertiefungen
- D: Dicke der Oxidschicht

## Patentansprüche

1. Folie (2) zur Herstellung eines metallischen Wabenkörpers (1), insbesondere eine Katalysator-Trägerkörpers, **dadurch gekennzeichnet, dass** die Folie (2) aus einem hochtemperaturfesten Material ist und auf ihren beiden Oberflächen in mindestens einer Messrichtung eine mittlere Oberflächenrauhigkeit (Ra) von mehr als 0,3 um (Mikrometer) aufweist, wobei die Folie (2) ein metallisches Grundmaterial aufweist und auf ihren beiden Oberflächen eine Oxidschicht (3) mit einer Dicke (D) zwischen 60 und 80 nm (Nanometer) aufweist, wobei die Oberflächenrauhigkeit (Ra) sich auf das metallische Grundmaterial der Folie (2) bezieht und die Dicke (D) auf beiden Oberflächen mit einer Toleranz von weniger als 10 % gleichmäßig ist.

2. Folie (2) nach Anspruch 1, **dadurch gekennzeichnet, dass** die Folie (2) eine gewalzte Folie ist und mindestens in Querrichtung (Q) quer zur Walzrichtung (L), vorzugsweise in Querrichtung (Q) und in Walzrichtung (L), eine mittlere Oberflächenrauhigkeit (Ra) von mehr als 0,3 µm, vorzugsweise mehr als 0,5 µm, besonders bevorzugt etwa 0,6 µm, aufweist.

3. Folie (2) nach Anspruch 1 oder 2, **dadurch gekennzeichnet, dass** die Oxidschicht (3) eine Dicke (D) zwischen 70 und 75 nm aufweist.

4. Folie (2) nach Anspruch 1, 2 oder 3, **dadurch gekennzeichnet, dass** die metallische Folie (2) aus einem hochtemperatur-korrosionsfesten Stahl mit Chrom- und Aluminiumanteilen besteht, insbesondere mit 1 bis 5 % Aluminium.

5. Folie (2) nach Anspruch 4, **dadurch gekennzeichnet, dass** das Grundmaterial 14 bis 25 % Chrom und 3 bis 5 % Aluminium enthält, insbesondere aus den Werkstoffen 1.4767 oder 1.4725 gemäß dem deutschen Stahlschlüssel besteht.

6. Folie (2) nach einem der vorhergehenden Ansprüche, **dadurch gekennzeichnet, dass** die Oxidschicht (3) im Wesentlichen aus Aluminiumoxid, insbesondere γ-Aluminiumoxid, besteht.

7. Folie (2) nach einem der vorhergehenden Ansprüche, **dadurch gekennzeichnet, dass** die Oxidschicht (3) auf beiden Oberflächen eine gleichmäßige Dicke (D) mit einer Toleranz von weniger als 5%, aufweist.

8. Wabenkörper (1) enthaltend mehrere Lagen mindestens einer Folie (2) nach einem der vorhergehenden Ansprüche, **dadurch gekennzeichnet, dass** nur selektiv in vorbestimmten Bereichen Verbindungsstellen (5) zwischen benachbarten Folienlagen durch Hartlöten, insbesondere Hochtemperatur-Vakuumlöten, hergestellt sind.

9. Wabenkörper (1) nach Anspruch 8, **dadurch gekennzeichnet, dass** nicht gelötete, sich berührende Bereiche außerhalb der Verbindungsstellen (5) nicht oder nur schwach durch Diffusionsverbindungen miteinander verbunden sind.

10. Wabenkörper (1) nach einem der Ansprüche 8 oder 9, **dadurch gekennzeichnet, dass** der Wabenkörper (1) mit einer zusätzlichen Beschichtung (6) versehen ist, insbesondere einem sogenannten Washcoat und/oder katalytisch aktiven Materialien.

11. Verwendung einer Folie mit den Merkmalen des Patentanspruchs 2 mit einer mittleren Oberflächenrauhigkeit (Ra) von 0,6 µm bis 0,8 µm zur Herstellung eines gelöteten Wabenkörpers, insbesondere mit einer Oxidschicht (3) mit einer Dicke (D) zwischen 60 und 80 nm (Nanometer), vorzugsweise zwischen 70 und 75 nm, auf ihren beiden Oberflächen.

## Claims

1. A foil (2) for producing a metallic honeycomb body (1), in particular a catalyst carrier body, **characterized in that** the foil (2) is composed of a high-temperature-resistant material and the foil (2) has, on both of its surfaces, a mean surface roughness (Ra) of greater than 0.3 µm (micrometers) in at least one measurement direction, wherein the foil (2) has a metallic basic material and on both of its surfaces has an oxide coat (3) with a thickness (D) from 60 to 80 nm (nanometers), wherein the surface roughness (Ra) refers to the metallic basic material of the foil (2) and the thickness (D) is uniform with a tolerance of less than 10% on both of its surfaces.

2. The foil (2) according to claim 1, **characterized in that** the foil (2) is a rolled foil and has a mean surface roughness (Ra) of greater than 0.3 µm, preferably greater than 0.5 µm, particularly preferably approximately 0.6 µm, at least in the transverse direction (Q) perpendicular to the rolling direction (L), preferably in the transverse direction (Q) and in the rolling direction (L).

3. The foil (2) according to claim 1 or 2, **characterized in that** the oxide coat (3) has a thickness (D) between 70 and 75 nm.

4. The foil (2) according to claim 1, 2 or 3, **characterized in that** the metallic foil (2) is composed of a high-temperature corrosion-resistant steel with chromium and aluminum components, in particular with 1 to 5% aluminum.

5. The foil (2) according to claim 4, **characterized in that** the basic material contains 14 to 25% chromium and 3 to 5% aluminum, and is composed in particular of the materials 1.4767 or 1.4725 according to the German steel key.

6. The foil (2) according to one of the preceding claims, **characterized in that** the oxide coat (3) is composed substantially of aluminum oxide, in particular γ-aluminum oxide.

7. The foil (2) according to one of the preceding claims, **characterized in that** the oxide coat (3) has a uniform thickness (D), with a tolerance of less than 5%, on both surfaces.

8. A honeycomb body (1) comprising a plurality of layers of at least one foil (2) according to one of the preceding claims, **characterized in that** connecting points (5) are produced between adjacent foil layers by brazing, in particular high-temperature vacuum brazing, only selectively in predetermined regions.

9. The honeycomb body (1) according to claim 8, **characterized in that** non-brazed, touching regions outside the connecting points (5) are not connected to one another or are connected to one another only weakly by means of diffusion connections.

10. The honeycomb body (1) according to one of claims 8 or 9, **characterized in that** the honeycomb body (1) is provided with an additional coating (6), in particular with a so-called washcoat and/or catalytically active materials.

11. The use of a foil having the features of patent claim 2 with a mean surface roughness (Ra) of 0.6 µm to 0.8 µm for producing a brazed honeycomb body, in particular with an oxide coat (3) with a thickness (D) from 60 to 80 nm (nanometers), preferably between 70 and 75 nm, on both of its surfaces.

## Revendications

1. Feuille (2) destinée à la fabrication d'un corps en nids d'abeilles métallique (1), notamment d'un corps support de catalyseur, **caractérisée en ce que** la feuille (2) consiste en un matériau résistant aux températures élevées et qu'elle a dans au moins une direction de mesure sur ses deux surfaces une rugosité moyenne de la surface (Ra) de plus de 0,3 µm (micromètres), la feuille (2) présentant un matériau de base métallique et ayant sur ses deux surfaces une couche d'oxyde (3) d'une épaisseur (D) entre 60 et 80 nm (nanomètres), la rugosité de la surface (Ra) se référant au matériau de base métallique de la feuille (2) et l'épaisseur (D) sur les deux surfaces étant régulière avec une tolérance de moins de 10 %.

2. Feuille (2) selon la revendication 1, **caractérisée en ce que** la feuille (2) est une feuille laminée et présente au moins en direction transversale (Q) transversalement à la direction de laminage (L), de préférence en direction transversale (Q) et en direction de laminage (L) une rugosité moyenne de la surface (Ra) de plus de 0,3 µm, de préférence plus de 0,5 µm, particulièrement préféré environ 0,6 µm.

3. Feuille (2) selon la revendication 1 ou 2, **caractérisée en ce que** la couche d'oxyde (3) a une épaisseur (D) entre 70 et 75 nm.

4. Feuille (2) selon la revendication, 1, 2 ou 3, **caractérisée en ce que** la feuille métallique (2) consiste en un acier résistant à la corrosion et aux températures élevées avec des portions de chrome et d'aluminium, notamment avec 5 % d'aluminium.

5. Feuille (2) selon la revendication 4, **caractérisée en ce que** le matériau de base contient 14 à 25 % de chrome et 3 à 5 % d'aluminium, notamment à partir des matières premières 1.4767 ou 1.4725 selon la Clé des Aciers en Allemand.

6. Feuille (2) selon l'une des revendications précédentes, **caractérisée en ce que** la couche d'oxyde (3) consiste essentiellement en oxyde d'aluminium, notamment en oxyde d'aluminium gamma.

7. Feuille (2) selon l'une des revendications précédentes, **caractérisée en ce que** la couche d'oxyde (3) a une épaisseur régulière (D) sur les deux surfaces avec une tolérance de moins de 5 %.

8. Corps en nids d'abeilles (1), contenant une pluralité de couches d'au moins une feuille (2) selon l'une des revendications précédentes, **caractérisé en ce que** des points de raccordement (5) ne sont générés que sélectivement dans des régions prédéterminées entre des couches de feuilles adjacentes, par brasage fort, notamment par le brasage sous vide à température élevée.

9. Corps en nids d'abeilles (1) selon la revendication 8, **caractérisé en ce qu'**en dehors des points de raccordement (5) des régions non brasées se contactant ne sont pas reliées les unes aux autres par des liaisons de diffusion ou ne le sont que faiblement.

10. Corps en nids d'abeilles (1) selon l'une des revendications 8 ou 9, **caractérisé en ce que** le corps en nids d'abeilles (1) est doté d'un revêtement supplémentaire (6), notamment d'un soi-disant wash coat et/ou de matériaux à activité catalytique.

11. L'utilisation d'une feuille ayant les caractéristiques de la revendication 2 avec une rugosité moyenne de la surface (Ra) de 0,6 µm à 0,8 µm pour la fabrication d'un corps en nids d'abeilles brasé, notamment avec une couche d'oxyde (3) ayant une épaisseur (D) entre 60 et 80 nm (nanomètres), de préférence entre 70 et 75 nm sur ses deux surfaces.
